Europäisches Patentamt

European Patent Office

Office européen des brevets

(19)

(11) Veröffentlichungsnummer: **0 228 503**
**B1**

(12) **EUROPÄISCHE PATENTSCHRIFT**

(45) Veröffentlichungstag der Patentschrift:
**13.12.89**

(51) Int. Cl.⁴: **H01M 2/06**

(21) Anmeldenummer: **86111349.6**

(22) Anmeldetag: **16.08.86**

(54) **Poldurchführung für eine elektrische Akkumulatorenzelle.**

(30) Priorität: **09.12.85 DE 8534580 U**

(43) Veröffentlichungstag der Anmeldung:
**15.07.87 Patentblatt 87/29**

(45) Bekanntmachung des Hinweises auf die Patenterteilung:
**13.12.89 Patentblatt 89/50**

(84) Benannte Vertragsstaaten:
**AT DE FR GB IT SE**

(56) Entgegenhaltungen:
**DE-A- 2 805 715**
**DE-A- 3 214 225**
**DE-U- 8 520 278**
**US-A- 1 371 894**
**US-A- 4 164 609**
**US-A- 4 495 260**

(73) Patentinhaber: **VARTA Batterie Aktiengesellschaft, Am Leineufer 51, D-3000 Hannover 21(DE)**

(72) Erfinder: **Falk, Klaus-Martin, Pappelstrasse 36, D-5800 Hagen 1(DE)**
Erfinder: **Schmidt, Hartmut, Dipl.-Ing., Asternstrasse 24, D-5820 Gevelsberg(DE)**

(74) Vertreter: **Kaiser, Dieter Ralf, Dipl.-Ing., Gundelhardtstrasse 72, D-6233 Kelkheim/Ts.(DE)**

## Beschreibung

Die Neuerung betrifft eine Poldurchführung für eine elektrische Akkumulatorenzelle, deren Kunststoffdeckel zur Aufnahme des Pols eine Öffnung besitzt, welche in einer von einem Deckeltubus mit einwärtsweisendem Abschlußflansch gebildeten kaminartigen Vertiefung des Deckels angeordnet ist, wobei der Pol im Bereich der Vertiefung mit einer aufgeschraubten und gegen den Deckeltubus abgedichteten Hülse als Polmutter versehen ist.

In der Akkumulatorentechnik entspricht es allgemeiner Erfahrung, daß es im Durchtrittsbereich des Poles durch den Zellendeckel leicht zu Undichtigkeiten kommt, die auf die Kriechfähigkeit des Elektrolyten und deren Begünstigung durch kapillaraktive Oberflächen des Poles zurückzuführen sind. Bei Traktionsbatterien haben Erschütterungen, denen sie im Fahrzeug ausgesetzt sind, auf das Undichtwerden einen zusätzlichen gravierenden Einfluß.

Die meisten Akkumulatorenhersteller suchen diesem Problem dadurch abzuhelfen, daß sie dem Zellendeckel auf der Innenseite um die Durchtrittsöffnung des Poles herum eine tubusförmige Kammer anspritzen, diese Kammer gegen den Pol abdichten und mit einer Vergußmasse auffüllen.

Eine andere Lösung besteht darin, den Pol mit einem Außengewinde zu versehen und mittels einer Polmutter sowie einem Dichtungselement, z.B. einem O-Ring, einen dichten Verbund zwischen dem Pol und dem Deckel herzustellen, wobei die Polmutter gleichzeitig den Pol in seiner Lage fixiert.

Gemäß deutschem Gebrauchsmuster G 8 520 278 hat die Polmutter die Form einer Hülse, während das Dichtungselement von einer Vergußmasse, die den Ringspalt zwischen Polmutter und Deckeltubus ausfüllt, gebildet wird.

In der Praxis hat sich indessen gezeigt, daß die Vergußmethode sehr umständlich ist, weil aus technischen Gründen die Vergußmasse mit Hilfe sehr kleiner Düsen in die Kammer gespritzt werden muß, was unvermeidbar eine Verschmutzung des Zellendeckels und die Notwendigkeit anschließender Reinigung nach sich zieht.

Die verschraubte Ausführung hat den Nachteil, daß höhere Zellmaße in Kauf zu nehmen sind und daß beim Verschrauben der Mutter sämtliche Anzugskräfte auf den Deckel übergehen, so daß sich der Deckel durchbiegen kann und infolgedessen eine Dichtung zwischen Pol und Zellendeckel oft nicht zustandekommt.

Gemäß US-PS 4 495 260 wird eine Poldurchführung beschrieben, bei der ein Verbundteil aus einer Bleibuchse und einer um diese herumgespritzte Kunststoffummantelung den dichtenden Übergang vom Bleipol zum Deckel herstellen.

Der Neuerung liegt daher die Aufgabe zugrunde, den von einer Hülse bereits gefaßten Zellenpol im Durchführungsbereich durch den Zellendeckel so abzudichten, daß die Dichtfunktion gewährleistet und mit keinem der genannten Nachteile behaftet ist.

Die Aufgabe wird neuerungsgemäß mit den im kennzeichnenden Teil des Anspruchs 1 angegebenen Maßnahmen gelöst.

Die Neuerung wird anhand zweier Figurendarstellungen näher erläutert.

Figur 1 zeigt ein neuerungsgemäßes Kunststoffspritzteil nach der Fertigmontage im Schnitt.
Figur 2 zeigt das Spritzteil in einer Einzelansicht.

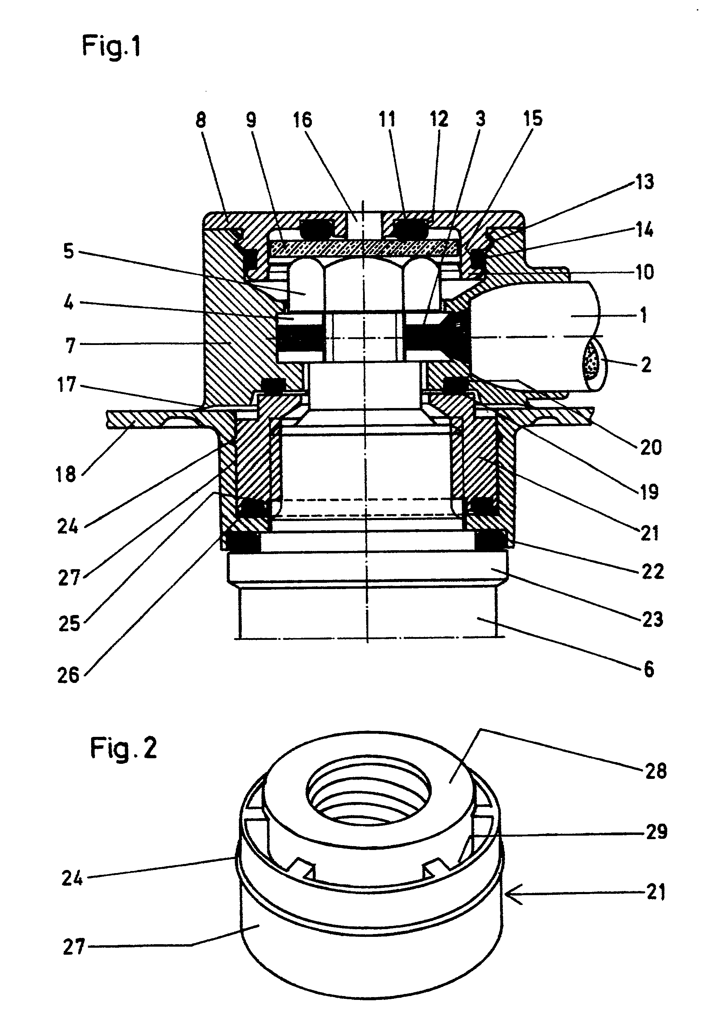

Wegen eines engen technischen Zusammenhangs mit einem Kabelverbinder zum Anschluß an die Endpole eines Akkumulators nach dem deutschen Gebrauchsmuster G 85 20 278 ist die Neuerung in der Figur 1 in diesem größeren Rahmen dargestellt. Das Kunststoffspritzteil 21 bidlet darin jedoch ein eigenständiges Bauteil, welches die ihm zugewiesene Aufgabe unabhängig von den übrigen dort ersichtlichen Konstruktionselementen erfüllt.

Gemäß der Figur besitzt das Spritzteil eine umlaufende Schnappkante 24 und eine umlaufende Nut 25, in der ein O-Ring 26 gehalten ist. Nut und O-Ring können sich statt im unteren Rande, wie hier dargestellt, auch an der Mantelfläche 27 des einstückigen Spritzteiles befinden. In jedem Fall gewährleisten sie nach der Fertigmontage die Dichtigkeit der Poldurchführung.

Mittels eines Innengewindes ist das Kunststoffspritzteil mit dem Pol 6 fest verschraubt, wobei es den ringzylindrischen Hohlraum der kaminartigen Vertiefung des Deckels 18 formschlüssig ausfüllt und sich im angezogenen Zustand selbst arretiert. Die Arretierung bewirkt die Schnappkante 24, indem sie in eine entsprechend geformte Nut am Zellendeckel gedrückt wird.

Die Mantelfläche 27 des Spritzteils ist konisch ausgebildet, wobei der Außendurchmesser des Spritzteils dem Innendurchmesser der Deckelöffnung angepaßt ist. Damit übernimmt die Mantelfläche zwei Funktionen: die Fixierung des Poles und die Ausbildung einer sich über die gesamte Mantelfläche erstreckenden Dichtfläche zwischen Spritzteil und Zellendeckel.

Der obere Rand des Spritzteiles ist plan und kann dadurch, wie es die Figur zeigt, in vorteilhafter Weise als Dichtfläche für den angeschlossenen Kabelverbinder bzw. dessen Kunststoffumspritzung 7 fungieren.

Die Einzeldarstellung des neuerungsgemäßen Spritzteiles nach Figur 2 läßt neben dem als Dichtfläche ausgebildeten oberen Rand 28 schlitzförmige Ausnehmungen 29 erkennen. Diese sind zur Aufnahme eines Werkzeugs bestimmt, mit dessen Hilfe das Spritzteil in seine endgültige Positionierung gebracht wird.

## Patentansprüche

1. Poldurchführung für eine elektrische Akkumulatorenzelle, deren Kunststoffdeckel zur Aufnahme des Pols eine Öffnung besitzt, welche in einer von einem Deckeltubus mit einwärtsweisendem Abschlußflansch gebildeten kaminartigen Vertiefung des Deckels angeordnet ist, wobei der Pol im Bereich der Vertiefung mit einer aufgeschraubten und gegen den Deckeltubus abgedichteten Hülse als Polmutter versehen ist, dadurch gekennzeichnet, daß die Hülse ein Kunststoffspritzteil (21) mit einer umlaufenden Schnappkante (24) ist, welches den ringzylindrischen Hohlraum der kaminartigen Vertiefung formschlüssig ausfüllt, so daß die Schnappkante (24) in eine entsprechend geformte Nut am Zellendeckel gedrückt wird.

2. Poldurchführung nach Anspruch 1, dadurch gekennzeichnet, daß das Kunststoffspritzteil eine umlaufende Nut (25) zur Aufnahme eines O-Ringes (26) besitzt und daß ihre Mantelfläche (27) konisch ausgebildet ist.

3. Poldurchführung nach Anspruch 2, dadurch gekennzeichnet, daß die umlaufende Nut im unteren Rand des Kunststoffspritzteils vorgesehen ist.

4. Poldurchführung nach Anspruch 2, dadurch gekennzeichnet, daß die umlaufende Nut an der Mantelfläche des Kunststoffspritzteils vorgesehen ist.

5. Poldurchführung nach einem der Ansprüche 1 bis 4, dadurch gekennzeichnet, daß der obere Rand des Kunststoffspritzteils als ebene Dichtfläche ausgebildet ist.

6. Poldurchführung nach einem der Ansprüche 1 bis 5, dadurch gekennzeichnet, daß das Kunststoffspritzteil mittels Innengewinde mit dem Pol (6) verschraubbar ist.

## Claims

1. Feedthrough for the pole of an electrical accumulator cell, whereof the plastics lid for receiving the pole has an opening which is located in a chimney-like recess in the lid formed by a lid tube with an inwardly directed closure flange, the pole being provided in the region of the recess with a screwed-on sleeve, sealed with respect to the lid tube, as a pole nut, characterised in that the sleeve is an injection moulded plastics part (21) with a peripheral snap edge (24), which fills the annular cylindrical cavity of the chimney-like recess in a form-locking manner, so that the snap edge (24) is pressed into a correspondingly shaped groove on the cell lid.

2. Pole feedthrough according to Claim 1, characterised in that the injection moulded plastics part has a peripheral groove (25) for receiving an O-ring (26) and that its outer surface (27) has a conical construction.

3. Pole feedthrough according to Claim 2, characterised in that the peripheral groove is provided in the lower edge of the injection moulded plastics part.

4. Pole feedthrough according to Claim 2, characterised in that the peripheral groove is provided on the outer surface of the injection moulded plastics part.

5. Pole feedthrough according to one of Claims 1 to 4, characterised in that the upper edge of the injection moulded plastics part is constructed as a flat sealing surface.

6. Pole feedthrough according to one of Claims 1 to 5, characterised in that the injection moulded plastics part can be screwed to the pole (6) by means of an internal thread.

## Revendications

1. Traversée de borne pour une cellule d'accumulateur électrique, dont le couvercle en matière plastique comporte, pour recevoir la borne, une ouverture qui est disposée dans un enfoncement, en forme de cheminée, du couvercle, enfoncement constitué par un tube de couvercle avec une fausse bride tournée en dedans, la borne étant munie dans la zone de l'enfoncement, en tant qu'écrou de borne, d'une douille vissée sur elle et étanchée vis à vis du tube de couvercle, traversée de borne caractérisée en ce que la douille est une pièce en matière plastique (21) moulée par injection, comportant une arête périphérique d'encliquetage (24), et qui remplit avec interpénétration de formes, l'espace creux cylindrique annulaire de l'enfoncement en forme de cheminée, si bien que l'arête d'encliquetage (24) est pressée dans une gorge correspondante ménagée sur le couvercle de la cellule d'accumulateur.

2. Traversée de borne selon la revendication 1, caractérisée en ce que la pièce en matière plastique moulée par injection comporte une gorge périphérique (25) prévue pour recevoir un joint d'étanchéité torique (26), et que sa surface-enveloppe (27) est conique.

3. Traversée de borne selon la revendication 2, caractérisée en ce que la gorge périphérique est prévue sur le bord inférieur de la pièce en matière plastique moulée par injection.

4. Traversée de borne selon la revendication 2, caractérisée en ce que la gorge périphérique est prévue sur la surface-enveloppe de la pièce en matière plastique moulée par injection.

5. Traversée de borne selon une des revendications 1 à 4, caractérisée en ce que le bord supérieur de la pièce en matière moulée par injection revêt la forme d'une surface d'étanchement plane.

6. Traversée de borne selon une des revendications 1 à 5, caractérisée en ce que la pièce en matière plastique moulée par injection est susceptible d'être vissée sur la borne (6) au moyen d'un filetage interne.

Fig.1

8  9  16  11  12  3  15

13

14

10

5

4

1

7

2

17

18

24

27

25

26

20

19

21

22

23

6

Fig. 2

28

29

24

21

27